(19)

**Europäisches Patentamt**
**European Patent Office**
**Office européen des brevets**

(11)  **EP 3 384 359 B1**

(12)  # EUROPEAN PATENT SPECIFICATION

(45) Date of publication and mention
of the grant of the patent:
**20.12.2023  Bulletin 2023/51**

(21) Application number: **16804950.0**

(22) Date of filing: **02.11.2016**

(51) International Patent Classification (IPC):
**G05D 1/02** *(2020.01)*

(52) Cooperative Patent Classification (CPC):
**G06T 7/579; G06T 7/593; H04N 13/204;**
G06T 2207/10021; G06T 2207/20076

(86) International application number:
**PCT/US2016/060074**

(87) International publication number:
**WO 2017/095579 (08.06.2017 Gazette 2017/23)**

(54) **MAP GENERATION BASED ON RAW STEREO VISION BASED MEASUREMENTS**

KARTENERZEUGUNG BASIEREND AUF ROHSTEREOSICHTBASIERTEN MESSUNGEN

GÉNÉRATION DE CARTE SUR LA BASE DE MESURES BRUTES REPOSANT SUR UNE VISION
STÉRÉOSCOPIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.12.2015  US 201562263546 P**
**24.06.2016  US 201615192874**

(43) Date of publication of application:
**10.10.2018  Bulletin 2018/41**

(73) Proprietor: **Qualcomm Incorporated**
**San Diego, CA 92121-1714 (US)**

(72) Inventors:
- **AGHAMOHAMMADI, Aliakbar**
**San Diego**
**California 92121-1714 (US)**
- **AGARWAL, Saurav**
**Bryan**
**Texas 77840 (US)**
- **OMIDSHAFIEI, Shayegan**
**Boston**
**Massachusetts 02125 (US)**
- **LOTT, Christopher**
**San Diego**
**California 92121-1417 (US)**
- **SOMASUNDARAM, Kiran**
**San Diego**
**California 92121 (US)**

- **BEHABADI, Bardia Fallah**
**San Diego**
**California 92121-1714 (US)**
- **GIBSON, Sarah Paige**
**San Diego**
**California 92121-1714 (US)**
- **WIERZYNSKI, Casimir Matthew**
**San Diego**
**California 92121-1714 (US)**
- **REITMAYR, Gerhard**
**San Diego**
**California 92121-1714 (US)**
- **DIAZ SPINDOLA, Serafin**
**San Diego**
**California 92121-1714 (US)**

(74) Representative: **Dunlop, Hugh Christopher et al**
**Maucher Jenkins**
**Seventh Floor Offices**
**Artillery House**
**11-19 Artillery Row**
**London SW1P 1RT (GB)**

(56) References cited:
**US-A1- 2006 178 828**

- Sebastian Thrun: "Learning Occupancy Grid Maps with Forward Sensor Models", Autonomous Robots, 1 September 2003 (2003-09-01), pages 111-127, XP055335484, Boston DOI: 10.1023/A:1025584807625 Retrieved from the Internet: URL:http://faculty.iiit.ac.in/~mkrishna/Th runOccGrid.pdf
- MARTIN M C ET AL: "Robot Evidence Grids", TECHNICAL REPORT CMU-RI-TR-96-06, XX, XX, 1 March 1996 (1996-03-01), page complete, XP002387344,
- ELFES A: "Using occupancy grids for mobile robot perception and navigation", COMPUTER, IEEE, US, vol. 22, no. 6, 1 June 1989 (1989-06-01), pages 46-57, XP011436714, ISSN: 0018-9162, DOI: 10.1109/2.30720
- BENNEWITZ M ET AL: "Utilizing reflection properties of surfaces to improve mobile robot localization", 2009 IEEE INTERNATIONAL CONFERENCE ON ROBOTICS AND AUTOMATION : (ICRA) ; KOBE, JAPAN, 12 - 17 MAY 2009, IEEE, PISCATAWAY, NJ, USA, 12 May 2009 (2009-05-12), pages 4287-4292, XP031509420, ISBN: 978-1-4244-2788-8
- IVAN DRYANOVSKI ET AL: "Multi-volume occupancy grids: An efficient probabilistic 3D mapping model for micro aerial vehicles", INTELLIGENT ROBOTS AND SYSTEMS (IROS), 2010 IEEE/RSJ INTERNATIONAL CONFERENCE ON, IEEE, PISCATAWAY, NJ, USA, 18 October 2010 (2010-10-18), pages 1553-1559, XP031813926, ISBN: 978-1-4244-6674-0

**Description**

**CROSS REFERENCE TO RELATED APPLICATION**

This application claims the benefit under 35 U.S.C. § 1 19(e) to United States Provisional Patent Application No. 62/263,546 entitled "MAP GENERATION BASED ON RAW STEREO VISION BASED MEASUREMENTS" filed on December 4, 2015.

**BACKGROUND**

**Field**

Certain aspects of the present disclosure generally relate to machine learning and, more particularly, to improving systems and methods of generating consistent maps using batch data and a sensor model.

**Background**

In some cases, it is desirable to determine a position of an autonomous vehicle, such as a robot, within a given area. In other cases, given the position of the robot, it is desirable to generate a map of the robot's surroundings. Maps may be generated via an incremental approach or a batch approach.

A map generated via the batch approach may be generated at once after multiple sensor measurements have been gathered throughout an environment to be mapped. That is, in the batch approach, all of the data of an environment to be mapped is gathered before calculating the map. Still, in some cases, a robot may not be able to gather all of the data in an environment prior to calculating the map.

Thus, in some cases, an incremental approach is specified for generating a map. A map generated via the incremental approach may be calculated based on initial data collected from the vicinity of the robot and updated with each new sensor measurements (e.g., updated as the robot changes its location). For the incremental approach, the sensor measurements are independent from each other. Therefore, the robot may use assumptions when calculating the map. Thus, the incremental map may not be as accurate as a maps calculated from the batch approach.

The publication "Learning Occupancy Grid Maps with Forward Sensor Models" by Sebastian Thrun, Autonomous Robots, 1st September 2003, pages 111 - 127, XP 055335484, relates to a new algorithm for acquiring occupancy grid maps with mobile robots. The approach relies on a statistical formulation of the mapping problem using forward models. It employs the expectation maximization algorithm for searching maps that maximize the likelihood of the sensor measurements.

**SUMMARY**

Aspects of the present invention are set out in the appended claims.

Additional features and advantages of the disclosure will be described below. It should be appreciated by those skilled in the art that this disclosure may be readily utilized as a basis for modifying or designing other structures for carrying out the same purposes of the present disclosure. It should also be realized by those skilled in the art that such equivalent constructions do not depart from the teachings of the disclosure as set forth in the appended claims. The novel features, which are believed to be characteristic of the disclosure, both as to its organization and method of operation, together with further objects and advantages, will be better understood from the following description when considered in connection with the accompanying figures. It is to be expressly understood, however, that each of the figures is provided for the purpose of illustration and description only and is not intended as a definition of the limits of the present disclosure.

**BRIEF DESCRIPTION OF THE DRAWINGS**

The features, nature, and advantages of the present disclosure will become more apparent from the detailed description set forth below when taken in conjunction with the drawings in which like reference characters identify correspondingly throughout.

FIGURE 1 illustrates an example implementation of motion planning with a system-on-a-chip (SOC), including a general-purpose processor in accordance with certain aspects of the present disclosure.

FIGURE 2 illustrates an example implementation of a system in accordance with certain aspects of the present disclosure.

FIGURES 3A, 3B, and 3C illustrate examples of a robot performing measurements according to aspects of the present disclosure.

FIGURE 4 illustrates an example of an environment to be mapped according to aspects of the present disclosure.

FIGURE 5 illustrates a flow diagram for a method of calculating a map with a highest probability of existence according to aspects of the present disclosure.

## DETAILED DESCRIPTION

The detailed description set forth below, in connection with the appended drawings, is intended as a description of various configurations and is not intended to represent the only configurations in which the concepts described herein may be practiced. The detailed description includes specific details for the purpose of providing a thorough understanding of the various concepts. However, it will be apparent to those skilled in the art that these concepts may be practiced without these specific details. In some instances, well-known structures and components are shown in block diagram form in order to avoid obscuring such concepts.

Based on the teachings, one skilled in the art should appreciate that the scope of the disclosure is intended to cover any aspect of the disclosure, whether implemented independently of or combined with any other aspect of the disclosure. For example, an apparatus may be implemented or a method may be practiced using any number of the aspects set forth. In addition, the scope of the disclosure is intended to cover such an apparatus or method practiced using other structure, functionality, or structure and functionality in addition to or other than the various aspects of the disclosure set forth. It should be understood that any aspect of the disclosure disclosed may be embodied by one or more elements of a claim.

The word "exemplary" is used herein to mean "serving as an example, instance, or illustration." Any aspect described herein as "exemplary" is not necessarily to be construed as preferred or advantageous over other aspects.

Although particular aspects are described herein, many variations and permutations of these aspects fall within the scope of the disclosure. Although some benefits and advantages of the preferred aspects are mentioned, the scope of the disclosure is not intended to be limited to particular benefits, uses or objectives. Rather, aspects of the disclosure are intended to be broadly applicable to different technologies, system configurations, networks and protocols, some of which are illustrated by way of example in the figures and in the following description of the preferred aspects. The detailed description and drawings are merely illustrative of the disclosure rather than limiting, the scope of the disclosure being defined by the appended claims and equivalents thereof.

For autonomous systems, such as robots, it is desirable to construct an accurate map of the robot's surroundings. The map may be generated via a sensor, such as a stereo vision sensor. Furthermore, when constructing maps for large environments, voxel sizes are increased to keep the computation tractable.

In one configuration, to determine a map, the map may be partitioned into voxels (e.g., cells). Each voxel may have a state of being occupied (e.g., full), partially occupied, or empty. When generating a map using the batch approach (e.g., batch data), conventional techniques may calculate inconsistent maps, may not incorporate a sensor model during map generation, and/or may not determine the occupancy level (e.g., full, partially full, or empty) of voxels. For example, in conventional systems, when calculating a map using the batch approach, a voxel is either zero (e.g., empty) or one (e.g., full). Thus, conventional systems do not consider the occupancy level of a voxel when calculating a map. In the present application, occupancy level may refer to the ratio of an occupancy over a space. Furthermore, occupancy level may also be referred to as occupancy and/or density.

Aspects of the present disclosure are directed to improving map generation using batch data, determining the occupancy level (e.g., empty, full, or partially full) of voxels, and incorporating a sensor model in the map generation. The improved map generation may calculate more accurate and more consistent maps in comparison to conventional maps calculated using batch data. That is, aspects of the present disclosure are directed to calculating a most likely map (e.g., maximum *a posteriori* map).

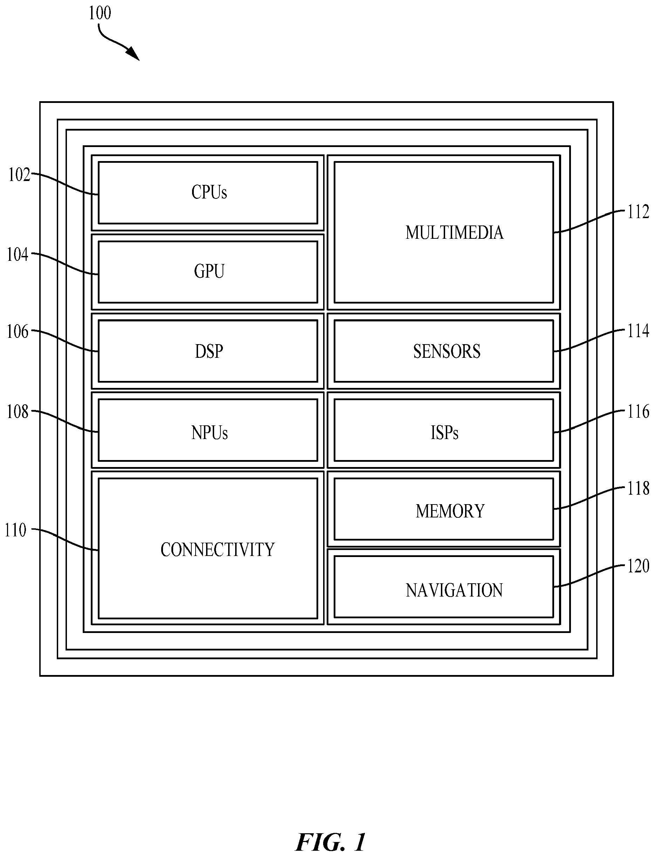

FIGURE 1 illustrates an example implementation of the aforementioned map calculation with a highest probability of existence using a system-on-a-chip (SOC) 100, which may include a general-purpose processor (CPU) or multi-core general-purpose processors (CPUs) 102 in accordance with certain aspects of the present disclosure. Variables (e.g., neural signals and synaptic weights), system parameters associated with a computational device (e.g., neural network with weights), delays, frequency bin information, and task information may be stored in a memory block associated with a neural processing unit (NPU) 108, in a memory block associated with a CPU 102, in a memory block associated with a graphics processing unit (GPU) 104, in a memory block associated with a digital signal processor (DSP) 106, in a dedicated memory block 118, or may be distributed across multiple blocks. Instructions executed at the general-purpose processor 102 may be loaded from a program memory associated with the CPU 102 or may be loaded from a dedicated memory block 118.

The SOC 100 may also include additional processing blocks tailored to specific functions, such as a GPU 104, a DSP 106, a connectivity block 110, which may include fourth generation long term evolution (4G LTE) connectivity, unlicensed Wi-Fi connectivity, USB connectivity, Bluetooth connectivity, and the like, and a multimedia processor 112 that may, for example, detect and recognize gestures. In one implementation, the NPU is implemented in the CPU, DSP, and/or GPU. The SOC 100 may also include a sensor processor 114, image signal processors (ISPs) 116, and/or navigation 120, which may include a global positioning system.

The SOC may be based on an ARM instruction set. In an aspect of the present disclosure, the instructions loaded into the general-purpose processor 102 may comprise code for gathering a corpus of sensor measurements indexed by a location of a sensor throughout an environment to be mapped. The instructions loaded into the general-purpose processor 102 may also comprise code for determining, after gathering the corpus of sensor measurements, a most likely occupancy level of each voxel of multiple voxels of the environment (e.g., a map) in accordance with the corpus of sensor measurements and a stochastic sensor model. The instructions loaded into the general-purpose processor 102 may further comprise code for calculating the most likely map based on the determined most likely occupancy level.

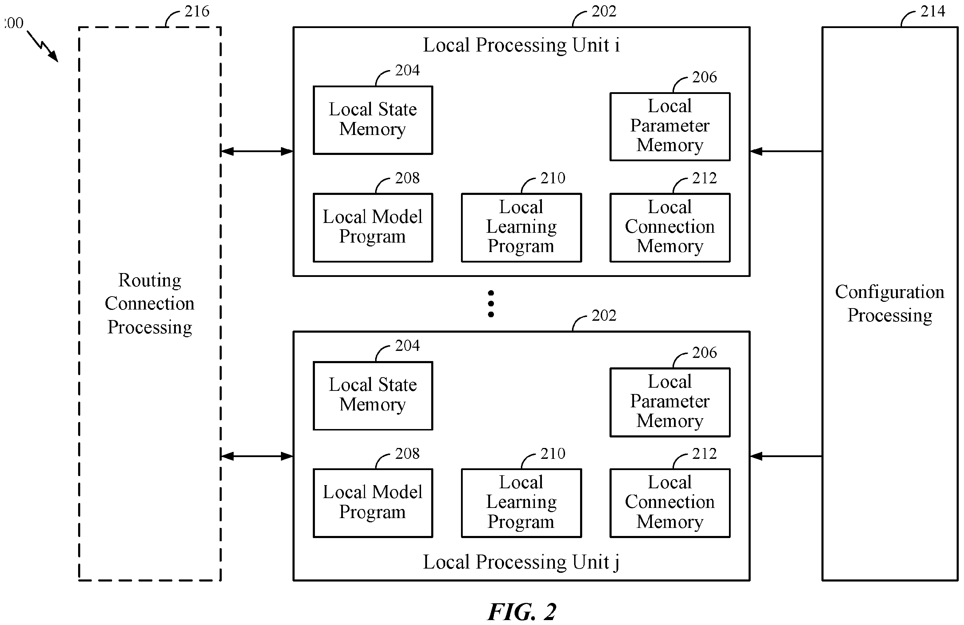

FIGURE 2 illustrates an example implementation of a system 200 in accordance with certain aspects of the present disclosure. As illustrated in FIGURE 2, the system 200 may have multiple local processing units 202 that may perform various operations of methods described herein. Each local processing unit 202 may comprise a local state memory 204 and a local parameter memory 206 that may store parameters of a neural network. In addition, the local processing unit 202 may have a local (neuron) model program (LMP) memory 208 for storing a local model program, a local learning program (LLP) memory 210 for storing a local learning program, and a local connection memory 212. Furthermore, as illustrated in FIGURE 2, each local processing unit 202 may interface with a configuration processor unit 214 for providing configurations for local memories of the local processing unit, and with a routing connection processing unit 216 that provides routing between the local processing units 202.

In one configuration, a map generating model is configured for gathering a corpus of sensor measurements indexed by a location of a sensor throughout an environment to be mapped. The model is also configured for determining, after gathering the corpus of sensor measurements, a most likely occupancy level of each voxel of multiple voxels of the environment in accordance with the corpus of sensor measurements and a stochastic sensor model. The model is further configured for calculating the most likely map based on the determined most likely occupancy level. The model includes a gathering means, determining means, and/or calculating means. In one aspect, the gathering means, determining means, and/or calculating means may be the general-purpose processor 102, program memory associated with the general-purpose processor 102, memory block 118, local processing units 202, and or the routing connection processing units 216 configured to perform the functions recited. In another configuration, the aforementioned means may be any module or any apparatus configured to perform the functions recited by the aforementioned means.

According to certain aspects of the present disclosure, each local processing unit 202 may be configured to determine parameters of the model based upon desired one or more functional features of the model, and develop the one or more functional features towards the desired functional features as the determined parameters are further adapted, tuned and updated.

MOST LIKELY MAP FROM RAW STEREO VISION BASED MEASUREMENTS

As previously discussed, aspects of the present disclosure are directed to improving map generation using batch data and a sensor model. That is, aspects of the present disclosure are directed to determining a most likely map (e.g., the maximum *a posteriori* map).

In one configuration, a mapping module is specified for an autonomous device, such as a robot. The mapping module may be a digital signal processor (DSP), app-processor, graphics processing unit (GPU), and/or another module. The mapping module may be specified to improve the accuracy of maps generated using batch data. Furthermore, the mapping module may process density maps (e.g., enable large voxels and reduce computational complexity), and/or incorporate a sensor model, such as a stochastic sensor model, in map construction. Additionally, the mapping module may be associated with measurement ray counting to improve accuracy and consistency. Aspects of the present disclosure relate to generating a map for a robot. Still, the maps are not limited to being generated for a robot and are contemplated for any type of device, such as, for example a car, airplane, boat, and/or human.

According to an aspect of the present disclosure a most likely map is calculated (e.g., generated) based on batch data. The most likely map is calculated based on the most likely occupancy level of each voxel from multiple voxels in an environment that is to be mapped. The most likely map refers to a map having a greatest probability of existence. Furthermore, the most likely occupancy of each voxel refers to an occupancy that has a greatest probability of existence. The multiple voxels define the area of the map. As previously discussed, based on sensor readings, the occupancy of a voxel may be empty, fully occupied, or partially occupied.

In one configuration, to calculate a most likely map based on batch data, sensor measurements are gathered throughout an environment to be mapped. The sensors measurements may be obtained from a sensor, such as a stereo vision sensor. The sensor measurements may be indexed by a sensor location. After gathering the sensor measurements, a device may determine a most likely occupancy of each voxel in the environment to be mapped. Furthermore, the most likely map is calculated based on the determined most likely occupancy.

The most likely occupancy may be determined based on the sensor measurements indexed by the sensor location and a stochastic sensor model. The most likely occupancy of each voxel may be based on a function of a number of times a measurement ray has bounced back from the voxel and a number of times the measurement ray has intercepted the voxel such that the measurement ray does not bounce back. Multiple measurements may be performed to determine the number of times a measurement ray has bounced back from the voxel and a number of times the measurement ray has intercepted the voxel without bouncing back. Furthermore, in one configuration determining the most likely occupancy level includes correlating sensor measurements from different sensor locations. As an example, the measurements from a first sensor location and the measurements from a second sensor location may be correlated to determine the occupancy level of each voxel of the multiple voxels.

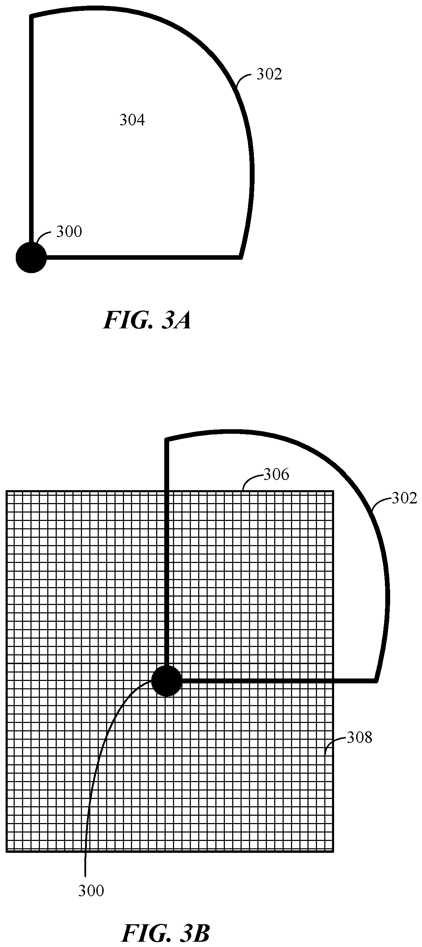

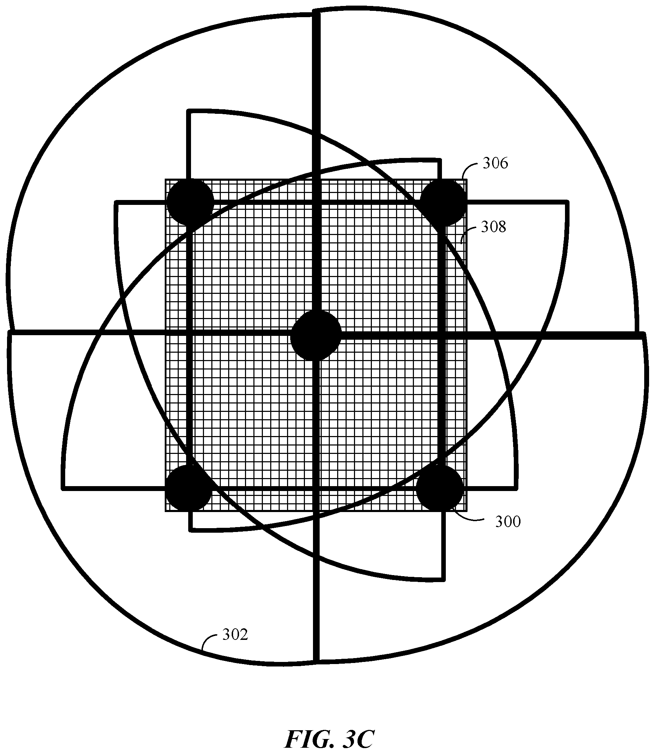

FIGURES 3A, 3B, and 3C illustrate examples of a robot performing measurements according to aspects of the present disclosure. FIGURE 3A illustrates an example of a robot 300 performing measurements via one or more sensors (not shown) of the robot 300. Measurements may refer to a measurement obtained based on whether a ray is intercepted by a voxel. Of course, aspects of the present disclosure are not limited to measurement rays and are also contemplated for other types of measurements. As shown in FIGURE 3A, the sensor of the robot 300 may have a measurement cone 302 such that the sensor receives measurements from an area 304 within the cone 302.

As shown in FIGURE 3B, according to an aspect of the present disclosure, the robot 300 may be placed in an environment to be mapped 306. The environment to be mapped 306 may include multiple voxels 308. As shown in FIGURE 3B, based on the measurements by the sensor, the sensor may determine an occupancy level of each voxel 308 within the measurement cone 302. It should be noted that the voxels 308 of FIGURE 3B are for illustrative purposes, the voxels of the present disclosure are not limited to the size or number of voxels shown in FIGURE 3B.

As shown in FIGURE 3C, according to an aspect of the present disclosure, the robot 300 may perform measurements at different locations such that the robot 300 gathers a corpus (e.g., an amount) of measurements indexed by sensor location in the environment to be mapped 306. The measurements at different locations may be performed at different times. For example, a robot may perform a first measurement at a first location at a first time and a second measurement at a second location at a second time. As previously discussed, in one configuration, multiple measurements are obtained from different locations to determine the most likely occupancy of each voxel 308. Furthermore, in one configuration, the measurements from the different locations are correlated to determine the most likely occupancy of each voxel 308 of the multiple voxels in the environment to be mapped 306. After gathering the corpus of sensor measurements, the robot may determine the most likely occupancy of each voxel 308. Furthermore, after determining the most likely occupancy the robot may calculate the most likely map of the environment to be mapped 306.

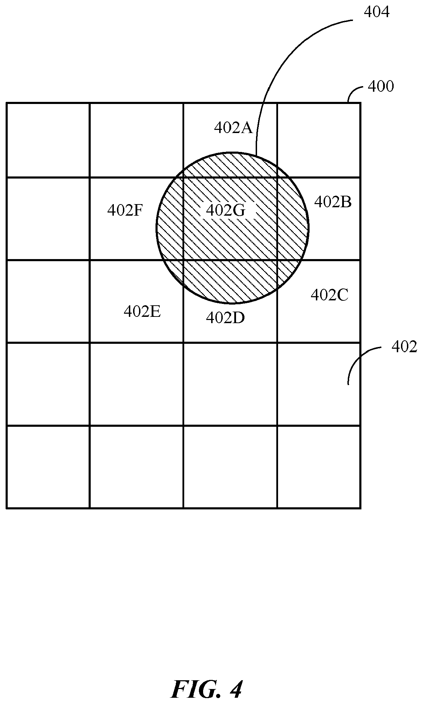

FIGURE 4 illustrates an example of an environment to be mapped 400 according to aspects of the present disclosure. As shown in FIGURE 4, a robot (not shown) may create a grid of the environment to be mapped 400. The grid forms multiple voxels 402. Furthermore, in this example, an object 404 is within the environment to be mapped 400. Thus, as shown in FIGURE 4, some of the voxels 402 are empty, some of the voxels 402A-402F are partially occupied, and one voxel 402G is fully occupied.

In one configuration, recursive filtering, such as recursive Bayesian filtering, is specified to determine the probability ($p$) of a map ($m$). A map ($m$) may include multiple voxels ($m^j$) such that $m = (m^1, m^2, ..., m^j)$. In one configuration, the probability ($p$) of an existence of a map ($m$) at a specific time-step ($k$) may be predicted (e.g., calculated) based on EQUATION 1.

$$p(m_k|D_{0:k}, x_{0:k}) = \frac{p(D_k|m_k, D_{0:k-1}, x_{0:k})p(m_k|D_{0:k-1}, x_{0:k})}{p(D_k|D_{0:k-1}, x_{0:k})} = \frac{p(D_k|m_k, x_k)p(m_k|D_{0:k-1}, x_{0:k})}{p(D_k|D_{0:k-1}, x_{0:k})} \quad (1)$$

In EQUATION 1, $m_k$ is the map at time-step k, $D_{0:k}$ is the measurements that have been collected by a sensor of the robot from time-step 0 to time-step k, and $x_{0:k}$ are the locations that have been visited by the robot from time-step 0 to time-step k. The measurements ($D_{0:k}$) may be referred to as measurement data or data. That is, EQUATION 1 determines the probability of an existence of a map ($m_k$) given the measurements ($D_{0:k}$) obtained by a sensor and the locations ($x_{0:k}$) visited by the sensor (e.g., the robot). The measurements ($D_{0:k}$) refers to the images/measurements (e.g., an occupancy of a voxel ($m^j$)) received via the sensor(s) of the robot. In one configuration, the sensors are independent from the robot. Furthermore, aspects of the present disclosure are directed to using the batch approach to calculate a map. Therefore, the probability is determined after obtaining all of the measurements ($D_{0:k}$).

The probability refers to the probability of the existence of the map (e.g., the most likely map). More specifically, the probability refers to the probability of a map given the most likely occupancy for each voxel ($m^j$) of the map. As an example, a map ($m$) may have two voxels ($m^1$, $m^2$). Based on the obtained measurements ($D_{0:k}$) and the visited locations ($x_{0:k}$), the robot may determine that the first voxel ($m^1$) has a profile of probability describing its occupancy.

In the following example, occupancy is either empty, half-occupied (e.g., partially-occupied), or full. Still, it should be noted that in some aspects the occupancy is continuous. In the present example, based on the obtained measurements ($D_{0:k}$) and the visited locations ($x_{0:k}$), the robot may determine that the first voxel ($m^1$) is empty for 10% of the measurements obtained at the visited locations, half-occupied for 70% of the measurements obtained at the visited locations, and fully occupied for 20% of the measurements obtained at the visited locations. Furthermore, the second voxel ($m^2$) may be empty for 30% of the measurements obtained at the visited locations, half-occupied for 65% of the measurements obtained at the visited locations, and fully occupied for 5% of the measurements obtained at the visited locations.

In this example, the first voxel and second voxel have an 70% and 65% probability of being half-occupied, which is more than the probability of either voxel being empty or full. Thus, in the present example, the most likely occupancy for the first and second voxels is half-occupied. In this example nine different maps may exist (e.g., both voxels empty, first voxel empty and second voxel half-occupied, first voxel empty and second voxel full, both voxels half-occupied, first voxel half-occupied and second voxel full, first voxel half-occupied and second voxel empty, first voxel full and second voxel half-occupied, first voxel full and second voxel empty, and both voxels full). Due to the values of occupancy probability, the probability of a map ($m_k$) with both voxels half-occupied is the highest. Aspects of the present disclosure are directed to determining the most likely map ($m^*$) given the probability of all the determined maps. Thus, the most likely map is the map with two half-occupied voxels.

The probability determined in EQUATION 1 may be based on prior knowledge (e.g., all of the measurements gathered up to a previous time-step ($D_{0:k-1}$)). In one configuration, the prior knowledge is determined based on EQUATION 2:

$$p(m_k|D_{0:k-1}, x_{0:k}) = p(m_{k-1}|D_{0:k-1}, x_{0:k-1}) \qquad (2)$$

In EQUATION 2, $p(m_{k-1}|D_{0:k-1}, x_{0:k-1})$ is the knowledge of the map at time step *k-1* based on the previously gathered measurements ($D_{0:k-1}$) and previously visited locations ($x_{0:k-1}$). Furthermore, in EQUATION 2, using $p(m_{k-1}|D_{0:k-1}, x_{0:k-1})$, the system predicts the probability of a map $p(m_k|D_{0:k-1}, x_{0:k})$ if the robot moves from a first location ($x_{0:k-1}$) to a second location ($x_{0:k}$). After predicting the probability $p(m_k|D_{0:k-1}, x_{0:k})$ with EQUATION 2, the system obtains the measurements ($D_{0:k}$) from the second location ($x_{0:k}$) to update the prediction using EQUATION 1. That is, the probability of the existence of map ($m_k$) given the obtained measurements ($D_{0:k}$) and the visited locations ($x_{0:k}$) is based on an update to the probability estimated at EQUATION 2. In EQUATION 2, $p(m_k|m_{k-1}, x_k)$ is the self-pose map filtering and $p(m_k|m_{k-1})$ is a forgetting factor for dynamic environments.

The measurements ($D_{0:k}$) in EQUATIONS 1-2 are based on disparity measurements. Still, in one configuration, the probability is based on pixel measurements ($z_{0:k}$). EQUATION 3 may be used to determine the probability of a map ($m_k$) based on pixel measurements:

$$p(m_k|D_{0:k-1}, x_{0:k}) = p(m_{k-1}|z_{0:k-1}, x_{0:k-1}) \frac{p(z_k|m_k, x_k)}{p(z_k|z_{0:k-1}, x_{0:k})} \qquad (3)$$

Another aspect of the present disclosure is directed to T-step recursive Bayesian filtering. EQUATION 4 may be used to determine a probability ($p$) of a map ($m_T$) at time step *T* given knowledge of a map ($m_0$) at time step zero. In the present application *k* and *T* may refer to a time-step:

$$p(m_T|D_{0:T}, x_{0:T}) = \frac{p(m_0) \prod_{t=0}^{T} p(D_t|m_t, x_t)}{\prod_{t=0}^{T} p(D_t|D_{0:t=1}, x_{0:t})} \qquad (4)$$

As previously discussed, after determining the probability of a map ($m_k$) it is desirable to determine the most likely map ($m^*$) based on the probability of all maps ($m$). That is, it is desirable to determine the maximum *a posteriori* (MAP) estimate of a map. EQUATION 5 may be used to determine the most likely map ($m^*$) based on the probability of all maps ($m$):

$$m^* = \arg\max_m \prod_{t=1}^{k} p(D_t|m, x_t)p(m) \qquad (5)$$

As shown in EQUATION 5, a most likely map ($m^*$) may be determined based on the probability of all maps ($m$) given all the measurements ($D_{0:k}$) obtained by a robot and the locations ($x_{0:k}$) visited by the robot. In one configuration, a log-likelihood is specified to determine the maximization:

$$\log p(D_{0:t}|m, x_{o:t}) \qquad (6)$$

Computing EQUATION 6 may increase the use of system resources. Thus, it may be desirable to improve the computation of EQUATION 6 by focusing on the number of times a voxel has been visited. Thus, in one configuration, the maximization is based on the measurement likelihood of a voxel ($m^j$) reflecting a beam. In one example, when the ray is reflected back from a voxel ($m^j$), the system determines that there are no fully occupied voxels before the voxel ($m^j$). Alternatively, the ray would not bounce back from the voxel ($m^j$) if there was a fully occupied voxel before the voxel ($m^j$).

Furthermore, two variables ($\alpha$ and $\beta$) may be defined to indicate a number of times a visited voxel reflected the measurement ray and a number of times the visited voxel did not reflect (e.g., intercept) the measurement ray. The measurement ray may be referred to as a ray, beam, and/or measurement beam. In this configuration, the variable $\alpha$ indicates the number of times the measurement beam has been reflected from a voxel ($m^j$). That is, variable $\alpha$ indicates the number of time the voxel has been occupied. Furthermore, variable $\beta$ indicates the number of times the measurement beam has been intercepted (e.g., not reflected) from the voxel ($m^j$). That is, variable $\beta$ indicates the number of times a voxel has been free. Variables $\alpha$ and $\beta$ may be used to calculate the maximization:

$$\log p(D_{0:t}|m, x_{o:t}) = \sum_{j=1}^{M} \alpha_j \log\big(p\big(z_t^v\big|c_{t,k}^v, m, x_t\big)m^j\big) + \sum_{j=1}^{M} \beta_j \log(1 - m^j) \qquad (7)$$

such that the maximization of a function of $\alpha$ and $\beta$:

$$m^* = \arg\max_m \sum_{j=1}^{M} \alpha_j \log\big(p\big(z_t^v\big|c_{t,k}^v, m, x_t\big)m^j\big) + \sum_{j=1}^{M} \beta_j \log(1 - m^j) \qquad (8)$$

In EQUATION 8, $z_t^v$ is the measurement corresponding to pixel v at time t, and $c_{t,k}^v$ is the cause associated with the measurement of pixel v at time t. Accordingly, the maximization (e.g., most likely map) is a function of a first number of times a voxel has been occupied ($\alpha$) and a second number of times the voxel has been free ($\beta$). Also considered in EQUATION 8 is a stochastic sensor model (e.g., $p\big(z_t^v\big|c_{t,k}^v, m, x_t\big)m^j$ ) as described in U.S. provisional patent application no. 62/262,339 filed on December 2, 2015, in the names of AGHAMOHAMMADI et al., the disclosure of which is express incorporated by reference herein in its entirety. The sensor model accounts for stochastic maps and sensor variability. Furthermore, in one configuration, if the sensor is uniform or reliable, for example, the probability may be uniform, e.g., $p =1$. When the sensor is uniform or reliable, the density of a voxel ($m^j$) may be calculated as follows:

$$\frac{\alpha_j}{\alpha_j + \beta_j} \qquad (9)$$

That is, the density of a voxel ($m^j$) may be the ratio of number of times the voxel ($m^j$) has been occupied $\alpha_j$ and the number of times the voxel ($m^j$) has been visited ($\alpha_j + \beta_j$).

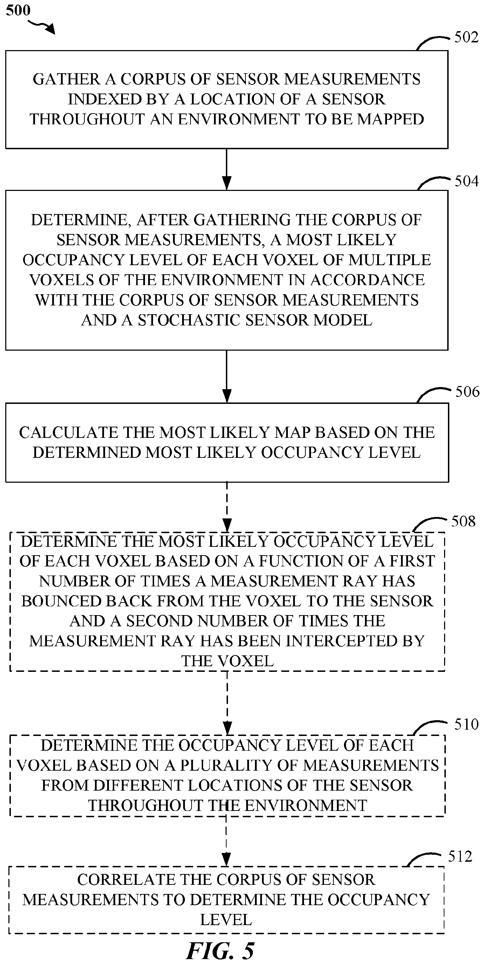

FIGURE 5 illustrates a method 500 for calculating a most likely map based on batch data. At block 502, the system gathers a corpus of sensor measurements indexed by a location of a sensor throughout an environment to be mapped. The corpus of sensor measurements may be referred to as batch data. In block 504, the system determines, after gathering the corpus of sensor measurements, a most likely occupancy level of each voxel of a plurality of voxels of the environment in accordance with the corpus of sensor measurements and a stochastic sensor model. Furthermore, in block 506, the system calculates the most likely map based on the determined most likely occupancy level. In some aspects, the most likely map is a maximum *a posteriori* map.

In some aspects, the robot may optionally determining the most likely occupancy level of each voxel based on a function of a first number of times a measurement ray has bounced back from the voxel to the sensor and a second number of times the measurement ray has been intercepted by the voxel, such that the intercepted measurement ray has not bounced back from the voxel to the sensor, in block 508. Alternatively, the robot may optionally determine the occupancy level of each voxel based on a plurality of measurements from different locations of the sensor throughout the environment, in block 510. In some aspects, , the robot may optionally correlate the corpus of sensor measurements to determine the occupancy level, in block 512.

In some aspects, method 500 may be performed by the SOC 100 (FIGURE 1) or the system 200 (FIGURE 2). That is, each of the elements of method 500 may, for example, but without limitation, be performed by the SOC 100 or the system 200 or one or more processors (e.g., CPU 102 and local processing unit 202) and/or other components included therein.

The various operations of methods described above may be performed by any suitable means capable of performing the corresponding functions. The means may include various hardware and/or software component(s) and/or module(s), including, but not limited to, a circuit, an application specific integrated circuit (ASIC), or processor. Generally, where there are operations illustrated in the figures, those operations may have corresponding counterpart means-plus-function components with similar numbering.

As used herein, the term "determining" encompasses a wide variety of actions. For example, "determining" may include calculating, computing, processing, deriving, investigating, looking up (e.g., looking up in a table, a database or another data structure), ascertaining and the like. Additionally, "determining" may include receiving (e.g., receiving information), accessing (e.g., accessing data in a memory) and the like. Furthermore, "determining" may include resolving, selecting, choosing, establishing and the like.

As used herein, a phrase referring to "at least one of" a list of items refers to any combination of those items, including single members. As an example, "at least one of: a, b, or c" is intended to cover: a, b, c, a-b, a-c, b-c, and a-b-c.

The various illustrative logical blocks, modules and circuits described in connection with the present disclosure may be implemented or performed with a general-purpose processor, a digital signal processor (DSP), an application specific integrated circuit (ASIC), a field programmable gate array signal (FPGA) or other programmable logic device (PLD), discrete gate or transistor logic, discrete hardware components or any combination thereof designed to perform the functions described herein. A general-purpose processor may be a microprocessor, but in the alternative, the processor may be any commercially available processor, controller, microcontroller or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the present disclosure may be embodied directly in hardware, in a software module executed by a processor, or in a combination of the two. A software module may reside in any form of storage medium that is known in the art. Some examples of storage media that may be used include random access memory (RAM), read only memory (ROM), flash memory, erasable programmable read-only memory (EPROM), electrically erasable programmable read-only memory (EEPROM), registers, a hard disk, a removable disk, a CD-ROM and so forth. A software module may comprise a single instruction, or many instructions, and may be distributed over several different code segments, among different programs, and across multiple storage media. A storage medium may be coupled to a processor such that the processor can read information from, and write information to, the storage medium. In the alternative, the storage medium may be integral to the processor.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

The functions described may be implemented in hardware, software, firmware, or any combination thereof. If implemented in hardware, an example hardware configuration may comprise a processing system in a device. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement signal processing functions. For certain aspects, a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further.

The processor may be responsible for managing the bus and general processing, including the execution of software stored on the machine-readable media. The processor may be implemented with one or more general-purpose and/or special-purpose processors. Examples include microprocessors, microcontrollers, DSP processors, and other circuitry that can execute software. Software shall be construed broadly to mean instructions, data, or any combination thereof, whether referred to as software, firmware, middleware, microcode, hardware description language, or otherwise. Machine-readable media may include, by way of example, random access memory (RAM), flash memory, read only memory (ROM), programmable read-only memory (PROM), erasable programmable read-only memory (EPROM), electrically erasable programmable Read-only memory (EEPROM), registers, magnetic disks, optical disks, hard drives, or any other suitable storage medium, or any combination thereof. The machine-readable media may be embodied in a computer-program product. The computer-program product may comprise packaging materials.

In a hardware implementation, the machine-readable media may be part of the processing system separate from the processor. However, as those skilled in the art will readily appreciate, the machine-readable media, or any portion thereof, may be external to the processing system. By way of example, the machine-readable media may include a transmission line, a carrier wave modulated by data, and/or a computer product separate from the device, all which may be accessed by the processor through the bus interface. Alternatively, or in addition, the machine-readable media, or any portion thereof, may be integrated into the processor, such as the case may be with cache and/or general register files. Although the various components discussed may be described as having a specific location, such as a local component, they may also be configured in various ways, such as certain components being configured as part of a distributed computing system.

The processing system may be configured as a general-purpose processing system with one or more microprocessors providing the processor functionality and external memory providing at least a portion of the machine-readable media, all linked together with other supporting circuitry through an external bus architecture. Alternatively, the processing system may comprise one or more neuromorphic processors for implementing the neuron models and models of neural systems described herein. As another alternative, the processing system may be implemented with an application specific integrated circuit (ASIC) with the processor, the bus interface, the user interface, supporting circuitry, and at least a portion of the machine-readable media integrated into a single chip, or with one or more field programmable gate arrays (FPGAs), programmable logic devices (PLDs), controllers, state machines, gated logic, discrete hardware components, or any other suitable circuitry, or any combination of circuits that can perform the various functionality described throughout this disclosure. Those skilled in the art will recognize how best to implement the described functionality for the processing system depending on the particular application and the overall design constraints imposed on the overall system.

The machine-readable media may comprise a number of software modules. The software modules include instructions that, when executed by the processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module. Furthermore, it should be appreciated that aspects of the present disclosure result in improvements to the functioning of the processor, computer, machine, or other system implementing such aspects.

If implemented in software, the functions may be stored or transmitted over as one or more instructions or code on a computer-readable medium. Computer-readable media include both computer storage media and communication media including any medium that facilitates transfer of a computer program from one place to another. A storage medium may be any available medium that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Additionally, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray® disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer- readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein. For certain aspects, the computer program product may include packaging material.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g.,

RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

**Claims**

1. A computer-implemented method of calculating a most likely map based on batch data, comprising

   gathering a corpus of sensor measurements indexed by a location of a sensor throughout an environment to be mapped (502);
   determining, after gathering the corpus of sensor measurements, a most likely occupancy level of each voxel of a plurality of voxels of the environment in accordance with the corpus of sensor measurements and a stochastic sensor model (504);
   **characterised in that**
   determining the most likely occupancy level of each voxel is based on a function of a first number of times a measurement ray has bounced back from the voxel to the sensor and a second number of times the measurement ray has been intercepted by the voxel, such that the intercepted measurement ray has not bounced back from the voxel to the sensor; and
   calculating the most likely map based on the determined most likely occupancy level (506).

2. The method of claim 1, in which the most likely map is a maximum *a posteriori* map.

3. The method of claim 1, further comprising determining the occupancy level of each voxel based on a plurality of measurements from different locations of the sensor throughout the environment.

4. The method of claim 1, further comprising correlating the corpus of sensor measurements to determine the occupancy level.

5. An apparatus for calculating a most likely map based on batch data, comprising:

   a memory; and
   at least one processor coupled to the memory, the at least one processor configured:

   to gather a corpus of sensor measurements indexed by a location of a sensor throughout an environment to be mapped;
   to determine, after gathering the corpus of sensor measurements, a most likely occupancy level of each voxel of a plurality of voxels of the environment in accordance with the corpus of sensor measurements and a stochastic sensor model; and
   to calculate the most likely map based on the determined most likely occupancy level;
   **characterised in that**
   the at least one processor is further configured to determine the most likely occupancy level of each voxel based on a function of a first number of times a measurement ray has bounced back from the voxel to the sensor and a second number of times the measurement ray has been intercepted by the voxel such that the intercepted measurement ray has not bounced back from the voxel to the sensor.

6. The apparatus of claim 5, in which the most likely map is a maximum *a posteriori* map.

7. The apparatus of claim 5, in which the at least one processor is further configured to determine the occupancy level of each voxel based on a plurality of measurements from different locations of the sensor throughout the environment.

8. The apparatus of claim 5, in which the at least one processor is further configured to correlate the corpus of sensor measurements to determine the occupancy level.

9. A non-transitory computer-readable medium having program code recorded thereon for calculating a most likely map based on batch data, the program code being executed by a processor and comprising:

   program code to gather a corpus of sensor measurements indexed by a location of a sensor throughout an environment to be mapped;

program code to determine, after gathering the corpus of sensor measurements, a most likely occupancy level of each voxel of a plurality of voxels of the environment in accordance with the corpus of sensor measurements and a stochastic sensor model; and

program code to calculate the most likely map based on the determined most likely occupancy level; **characterised in that**

the program code further comprises program code to determine the most likely occupancy level of each voxel based on a function of a first number of times a measurement ray has bounced back from the voxel to the sensor and a second number of times the measurement ray has been intercepted by the voxel such that the intercepted measurement ray has not bounced back from the voxel to the sensor.

10. The non-transitory computer-readable medium of claim 9, in which the most likely map is a maximum *a posteriori* map.

11. The non-transitory computer-readable medium of claim 9, in which the program code further comprises program code to determine the occupancy level of each voxel based on a plurality of measurements from different locations of the sensor throughout the environment.

12. The non-transitory computer-readable medium of claim 9, in which the program code further comprises program code to correlate the corpus of sensor measurements to determine the occupancy level.

**Patentansprüche**

1. Ein computerimplementiertes Verfahren zum Berechnen einer wahrscheinlichsten Karte bzw. Abbildung basierend auf Batch- bzw. Stapeldaten, das Folgendes aufweist:

Sammeln eines Großteils bzw. Betrags an Sensormessungen, die indiziert sind hinsichtlich eines Standorts eines Sensors innerhalb einer Umgebung, die abgebildet werden soll (502);

Bestimmen, nach Sammeln des Großteils der Sensormessungen, eines wahrscheinlichsten Gesetztseins jedes Voxels einer Vielzahl von Voxeln der Umgebung gemäß dem Großteil der Sensormessungen und einem stochastischen Sensormodell (504);

**dadurch gekennzeichnet, dass**

Bestimmen des wahrscheinlichsten Gesetztseins jedes Voxels auf einer Funktion einer ersten Anzahl von Malen basiert, die ein Messungsstrahl von dem Voxel zu dem Sensor zurückreflektiert wurde, und einer zweiten Anzahl von Malen, die der Messungsstrahl durch das Voxel abgefangen wurde, so dass der abgefangene Messungsstrahl nicht von dem Voxel zu dem Sensor zurückreflektiert wurde; und

Berechnen der wahrscheinlichsten Abbildung basierend auf dem bestimmten wahrscheinlichsten Gesetztsein (506).

2. Verfahren nach Anspruch 1, indem die wahrscheinlichste Abbildung eine Maximum-*a-posteriori*-Abbildung ist.

3. Verfahren nach Anspruch 1, das weiter Bestimmen des Gesetztseins jedes Voxels basierend auf einer Vielzahl von Messungen von unterschiedlichen Positionen des Sensors innerhalb der Umgebung aufweist.

4. Verfahren nach Anspruch 1, das weiter Korrelieren des Großteils von Sensormessungen zum Bestimmen des Gesetztseins aufweist.

5. Eine Vorrichtung zum Berechnen einer wahrscheinlichsten Karte bzw. Abbildung basierend auf Batch- bzw. Stapeldaten, die Folgendes aufweist:

einen Speicher; und

wenigstens einen Prozessor, der an den Speicher gekoppelt ist, wobei der wenigstens eine Prozessor konfiguriert ist:

zum Sammeln eines Großteils bzw. Betrags von Sensormessungen, die in Bezug auf einen Standort eines Sensors innerhalb einer Umgebung, die abgebildet werden soll, indiziert sind;

zum Bestimmen, nach Sammeln des Großteils von Sensormessungen, eines wahrscheinlichsten Gesetztseins jedes Voxels einer Vielzahl von Voxeln der Umgebung gemäß dem Großteil von Sensormessungen und einem stochastischen Sensormodell; und

zum Berechnen der wahrscheinlichsten Abbildung basierend auf dem bestimmten wahrscheinlichsten Gesetztsein;

**dadurch gekennzeichnet, dass**

der wenigstens eine Prozessor weiter konfiguriert ist zum Bestimmen des wahrscheinlichsten Gesetztseins jedes Voxels basierend auf einer Funktion einer ersten Anzahl von Malen, die ein Messungsstrahl von dem Voxel zu dem Sensor zurückreflektiert wurde und einer zweiten Anzahl von Malen, die der Messungsstrahl durch das Voxel abgefangen wurde, so dass der abgefangene Messungsstrahl nicht von dem Voxel zu dem Sensor zurückreflektiert wurde.

6. Vorrichtung nach Anspruch 5, in der die wahrscheinlichste Abbildung eine Maximum-*a-posteriori*-Abbildung ist.

7. Vorrichtung nach Anspruch 5, in der der wenigstens eine Prozessor weiter konfiguriert ist zum Bestimmen des Gesetztseins jedes Voxel ist basierend auf einer Vielzahl von Messungen von unterschiedlichen Positionen des Sensors innerhalb der Umgebung.

8. Vorrichtung nach Anspruch 5, in der der wenigstens eine Prozessor weiter konfiguriert ist zum Korrelieren des Großteils von Sensormessungen zum Bestimmen des Gesetztseins.

9. Ein nicht transitorisches computerlesbares Medium mit darauf aufgezeichnetem Programmcode zum Berechnen einer wahrscheinlichsten Karte bzw. Abbildung basierend auf Batch- bzw. Stapeldaten, wobei der Programmcode durch einen Prozessor ausgeführt wird und Folgendes aufweist:

Programmcode zum Sammeln eines Großteils bzw. Betrags von Sensormessungen, die hinsichtlich einer Position eines Sensors innerhalb einer Umgebung, die abgebildet werden soll, indiziert sind;

Programmcode zum Bestimmen, nach Sammeln des Großteils der Sensormessungen, eines wahrscheinlichsten Gesetztseins jedes Voxels einer Vielzahl von Voxeln der Umgebung gemäß dem Großteil der Sensormessungen und einem stochastischen Sensormodell; und

Programmcode zum Berechnen der wahrscheinlichsten Abbildung basierend auf dem bestimmten wahrscheinlichsten Gesetztsein;

**dadurch gekennzeichnet, dass**

der Programmcode weiter Programmcode aufweist zum Bestimmen des wahrscheinlichsten Gesetztseins jedes Voxels basierend auf einer Funktion einer ersten Anzahl von Malen basiert, die ein Messungsstrahl von dem Voxel zu dem Sensor zurückreflektiert wurde, und einer zweiten Anzahl von Malen, die der Messungsstrahl durch das Voxel abgefangen wurde, so dass der abgefangene Messungsstrahl nicht von dem Voxel zu dem Sensor zurückreflektiert wurde.

10. Nicht transitorisches computerlesbares Medium nach Anspruch 9, indem die wahrscheinlichste Abbildung eine Maximum-*a-posteriori*-Abbildung ist.

11. Nicht transitorisches computerlesbares Medium nach Anspruch 9, in dem der Programmcode weiter Programmcode aufweist zum Bestimmen des Gesetztseins jedes Voxels basierend auf einer Vielzahl von Messungen von unterschiedlichen Positionen des Sensors innerhalb der Umgebung.

12. Nicht transitorisches computerlesbares Medium nach Anspruch 9, in dem der Programmcode weiter Programmcode aufweist zum Korrelieren des Großteils von Sensormessungen zum Bestimmen des Gesetztseins.

**Revendications**

1. Un procédé mis en oeuvre par ordinateur de calcul d'une carte la plus probable en fonction de données par lots, comprenant :

le recueil d'un corpus de mesures de capteur indexées par un emplacement d'un capteur sur la totalité d'un environnement à cartographier (502),

la détermination, après le recueil du corpus de mesures de capteur, d'un niveau d'occupation le plus probable de chaque voxel d'une pluralité de voxels de l'environnement conformément au corpus de mesures de capteur et à un modèle de capteur stochastique (504),

**caractérisé en ce que**
la détermination du niveau d'occupation le plus probable de chaque voxel est basée sur une fonction d'un premier nombre de fois où un rayon de mesure a rebondi à partir du voxel vers le capteur et d'un deuxième nombre de fois où le rayon de mesure a été intercepté par le voxel, de sorte que le rayon de mesure intercepté n'a pas rebondi à partir du voxel vers le capteur, et
le calcul de la carte la plus probable en fonction du niveau d'occupation le plus probable déterminé (506).

2. Le procédé selon la Revendication 1, dans lequel la carte la plus probable est une carte *a posteriori* maximale.

3. Le procédé selon la Revendication 1, comprenant en outre la détermination du niveau d'occupation de chaque voxel en fonction d'une pluralité de mesures à partir de différents emplacements du capteur sur la totalité de l'environnement.

4. Le procédé selon la Revendication 1, comprenant en outre la corrélation du corpus de mesures de capteur de façon à déterminer le niveau d'occupation.

5. Un appareil de calcul d'une carte la plus probable en fonction de données par lots, comprenant :

une mémoire, et
au moins un processeur couplé à la mémoire, le au moins un processeur étant configuré de façon à :

recueillir un corpus de mesures de capteur indexées par un emplacement d'un capteur sur la totalité d'un environnement à cartographier,
déterminer, après le recueil du corpus de mesures de capteur, un niveau d'occupation le plus probable de chaque voxel d'une pluralité de voxels de l'environnement conformément au corpus de mesures de capteur et à un modèle de capteur stochastique, et
calculer la carte la plus probable en fonction du niveau d'occupation le plus probable déterminé,

**caractérisé en ce que**
le au moins un processeur est configuré en outre de façon à déterminer le niveau d'occupation le plus probable de chaque voxel en fonction d'une fonction d'un premier nombre de fois où un rayon de mesure a rebondi à partir du voxel vers le capteur et d'un deuxième nombre de fois où le rayon de mesure a été intercepté par le voxel de sorte que le rayon de mesure intercepté n'a pas rebondi à partir du voxel vers le capteur.

6. L'appareil selon la Revendication 5, dans lequel la carte la plus probable est une carte *a posteriori* maximale.

7. L'appareil selon la Revendication 5, dans lequel le au moins un processeur est configuré en outre de façon à déterminer le niveau d'occupation de chaque voxel en fonction d'une pluralité de mesures à partir de différents emplacements du capteur sur la totalité de l'environnement.

8. L'appareil selon la Revendication 5, dans lequel le au moins un processeur est configuré en outre de façon à corréler le corpus de mesures de capteur de façon à déterminer le niveau d'occupation.

9. Un support lisible par ordinateur non transitoire possédant du code de programme enregistré sur celui-ci destiné au calcul d'une carte la plus probable en fonction de données par lots, le code de programme étant exécuté par un processeur et comprenant :

du code de programme destiné à recueillir un corpus de mesures de capteur indexées par un emplacement d'un capteur sur la totalité d'un environnement à cartographier,
du code de programme destiné à déterminer, après le recueil du corpus de mesures de capteur, un niveau d'occupation le plus probable de chaque voxel d'une pluralité de voxels de l'environnement conformément au corpus de mesures de capteur et à un modèle de capteur stochastique, et
du code de programme destiné à calculer la carte la plus probable en fonction du niveau d'occupation le plus probable déterminé,
**caractérisé en ce que**
le code de programme comprend en outre du code de programme destiné à déterminer le niveau d'occupation le plus probable de chaque voxel en fonction d'une fonction d'un premier nombre de fois où un rayon de mesure a rebondi à partir du voxel vers le capteur et d'un deuxième nombre de fois où le rayon de mesure a été intercepté par le voxel de sorte que le rayon de mesure intercepté n'a pas rebondi à partir du voxel vers le capteur.

10. Le support lisible par ordinateur non transitoire selon la Revendication 9, dans lequel la carte la plus probable est une carte *a posteriori* maximale.

11. Le support lisible par ordinateur non transitoire selon la Revendication 9, dans lequel le code de programme comprend en outre du code de programme destiné à déterminer le niveau d'occupation de chaque voxel en fonction d'une pluralité de mesures à partir de différents emplacements du capteur sur la totalité de l'environnement.

12. Le support lisible par ordinateur non transitoire selon la Revendication 9, dans lequel le code de programme comprend en outre du code de programme destiné à corréler le corpus de mesures de capteur de façon à déterminer le niveau d'occupation.

100

102 — CPUs

104 — GPU

106 — DSP

108 — NPUs

110 — CONNECTIVITY

MULTIMEDIA — 112

SENSORS — 114

ISPs — 116

MEMORY — 118

NAVIGATION — 120

*FIG. 1*

**FIG. 2**

EP 3 384 359 B1

**FIG. 3A**

**FIG. 3B**

*FIG. 3C*

**FIG. 4**

500

502

GATHER A CORPUS OF SENSOR MEASUREMENTS
INDEXED BY A LOCATION OF A SENSOR
THROUGHOUT AN ENVIRONMENT TO BE MAPPED

504

DETERMINE, AFTER GATHERING THE CORPUS OF
SENSOR MEASUREMENTS, A MOST LIKELY
OCCUPANCY LEVEL OF EACH VOXEL OF MULTIPLE
VOXELS OF THE ENVIRONMENT IN ACCORDANCE
WITH THE CORPUS OF SENSOR MEASUREMENTS
AND A STOCHASTIC SENSOR MODEL

506

CALCULATE THE MOST LIKELY MAP BASED ON THE
DETERMINED MOST LIKELY OCCUPANCY LEVEL

508

DETERMINE THE MOST LIKELY OCCUPANCY LEVEL
OF EACH VOXEL BASED ON A FUNCTION OF A FIRST
NUMBER OF TIMES A MEASUREMENT RAY HAS
BOUNCED BACK FROM THE VOXEL TO THE SENSOR
AND A SECOND NUMBER OF TIMES THE
MEASUREMENT RAY HAS BEEN INTERCEPTED BY
THE VOXEL

510

DETERMINE THE OCCUPANCY LEVEL OF EACH
VOXEL BASED ON A PLURALITY OF MEASUREMENTS
FROM DIFFERENT LOCATIONS OF THE SENSOR
THROUGHOUT THE ENVIRONMENT

512

CORRELATE THE CORPUS OF SENSOR
MEASUREMENTS TO DETERMINE THE OCCUPANCY
LEVEL

*FIG. 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62263546

- US 62262339, AGHAMOHAMMADI

**Non-patent literature cited in the description**

- **SEBASTIAN THRUN.** Learning Occupancy Grid Maps with Forward Sensor Models. *Autonomous Robots,* 01 September 2013, 111-127